# EUROPÄISCHE PATENTSCHRIFT

(11) **EP 0 878 334 B1**
(45) Veröffentlichungstag und Bekanntmachung des Hinweises auf die Patenterteilung: **24.09.2003**
(21) Anmeldenummer: 98108509.5
(22) Anmeldetag: 11.05.1998
(51) Int. Cl.: B60G 21/055

(54) **Stabilisator**
Stabilizer
Stabilisateur

(30) Priorität: 12.05.1997 DE 19719427; 08.10.1997 DE 19744324; 31.12.1997 DE 19758292
(43) Veröffentlichungstag der Anmeldung: 18.11.1998
(73) Patentinhaber: Firma Muhr und Bender, D-57439 Attendorn (DE)
(72) Erfinder: Muhr, Thomas, Dr.-Ing., 57439 Attendorn (DE); Schnaubelt, Leo, Dipl.-Ing., 35708 Haiger (DE)
(74) Vertreter: Gesthuysen, von Rohr & Eggert

(56) Entgegenhaltungen:
- DE-A- 2 805 007
- DE-A- 2 846 445
- JP-A- 2 034 693
- JP-A- 6 050 370
- JP-B- 62 021 642
- US-A- 4 378 122
- MARUZEN KABUSHIKI KAISHA FEDERSTAHL Bd. 3, 20 Dezember 1982, JAPAN, Seiten 356 - 357
- SHOJI MATZUKI: 'Study of hollow stabilizer bar' SAE TECHNICAL PAPER SERIES 02 M{rz 1979, WARRENDALE. PENNSYLVANIA, USA,

## Beschreibung

Die Erfindung betrifft einen Stabilisator für Kraftfahrzeuge, der einen annähernd runden, vorzugsweise einen kreisrunden oder einen ringförmigen, vorzugsweise einen kreisringförmigen Querschnitt aufweist, aus mehreren Stabilisatorabschnitten besteht und im wesentlichen U-förmig ausgeführt ist, also aus zwei U-Schenkeln und einem U-Rücken besteht, wobei zwischen den U-Schenkeln und dem U-Rücken bogenförmige Übergangsbereiche vorgesehen sind.

Stabilisatoren der eingangs beschriebenen Art sind grundsätzlich bekannt, beispielsweise aus der DE 28 05 007 A1. Sie werden an den Vorder- und/oder Hinterachsen von Kraftfahrzeugen verwendet und dienen primär dazu, die Roll- und Wankneigung von Kraftfahrzeugen bei Kurvenfahrten zu verringern. U-förmig ausgeführte Stabilisatoren werden mit den freien Enden der U-Schenkel an den Radführungsteilen befestigt, während sie im Schulterbereich in am Fahrzeugaufbau angeordneten Gummilagern gelagert sind. Unter dem generell immer stärker Beachtung findenden Gesichtspunkt der "Gewichtsreduzierung" werden seit einiger Zeit zunehmend Stabilisatoren mit kreisringförmigem Querschnitt, also aus Rohren gefertigte Stabilisatoren, sogenannte Rohrstabilisatoren verwendet.

Da nun bei Rohren die Beanspruchung höher ist als bei vergleichbaren Vollstäben (*D*_{*a*} Vollstab < *D*_{*a*} Rohr), erreichen sie bei hoher Belastung nicht die geforderte Anzahl an Lastwechseln bzw. können sie bei vorgegebener Anzahl an Lastwechseln nur für niedrigere Belastungen eingesetzt werden.

In der DE 28 05 007 A1 ist nun ein Stabilisator beschrieben, der aus einem U-förmig gebogenem Rohr besteht. Dabei soll die geforderte Anzahl an Lastwechseln bei einer vorgegebenen Beanspruchung dadurch erreicht werden, daß in allen Stabilisatorabschnitten gleiche Beanspruchungen vorliegen. Es handelt sich also um einen Stabilisator mit gleicher Beanspruchung in allen Stabilisatorabschnitten. Die Auslegung der bekannten Stabilisatoren unter dem Gesichtspunkt gleicher Beanspruchung hat dazu geführt, daß man die besonders hoch beanspruchten Bereiche verstärkt hat. (siehe Seite 6, zweiter Absatz und Seite 9, zweiter Absatz der DE 28 05 007 A1), nämlich durch Vergrößerung des Außendurchmessers, durch Vergrößerung der Wandstärke und/oder durch spezielles Härten der Übergangsbereiche. Gleichwohl ist in Fällen sehr hoher Beanspruchung bisher eine wirkungsvolle Gewichtsreduzierung bei Stabilisatoren nicht möglich gewesen bzw. haben die Stabilisatoren nicht die erforderliche Anzahl an Lastwechseln standgehalten.

Ein Rohrstabilisator der Art, wie er aus der DE 28 05 007 A1 bekannt ist, ist auch aus der DE 28 46 445 A1 bekannt. Bei diesem bekannten Rohrstabilisator sind die besonders hoch beanspruchten Bereiche dadurch verstärkt worden, daß die Wandstärke vergrößert worden ist, beispielsweise auch dadurch, daß man in die besonders hoch beanspruchten Bereiche, nämlich in die bogenförmige Übergangsbereiche zwischen den U-Schenkeln und dem U-Rücken, rohrförmige Einlagen eingebracht hat.

Im übrigen ist es im Stand der Technik bekannt (vgl. die Literaturstelle "Federstahl", 3. Aufl. (Maruzen Kabushiki Kaisha, JP), 20. Dezember 1982), bei Federn eine Festigkeitserhöhung durch Aufkohlung der Oberflächenrandschichten zu erzielen.

Schließlich ist es im Stand der Technik auch bekannt (vgl. JP 6-50370 A1), bei Rohrstabilisatoren die innere Oberfläche dem Kugelstrahlverfahren aussetzen.

Der Erfindung liegt die Aufgabe zugrunde, Stabilisatoren, insbesondere Rohrstabilisatoren, zur Verfügung zu stellen, die auch bei sehr hoher Beanspruchung die geforderte Anzahl an Lastwechseln standhalten bzw. bei normalen Beanspruchungen eine noch größere Gewichtsreduzierung ermöglichen.

Die zuvor hergeleitete und aufgezeigte Aufgabe ist erfindungsgemäß bei einem Stabilisator der in Rede stehenden Art dadurch gelöst, daß in den wesentlichen Stabilisatorabschnitten - abweichend vom Stabilisator gleicher Beanspruchung - unter Erhöhung der Beanspruchung des torsionsdominant beanspruchten U-Rückens durch Verlagerung von mechanischer Verformungsarbeit aus den Übergangsbereichen in den U-Rücken eine Schwingfestigkeitsoptimierung durchgeführt ist, so daß eine quasi-gleiche Schwingfestigkeit vorhanden ist. Erfindungsgemäß ist erkannt worden, daß bei unterschiedlichen Beanspruchungsarten gleiche Beanspruchungen nicht zu gleicher Schwingfestigkeit führen, daß vielmehr ein torsionsdominant beanspruchter Stabilisatorabschnitt bei gleicher Beanspruchung - gleiche Vergleichsspannung - eine größere Schwingfestigkeit hat als ein normalspannungsdominant beanspruchter Stabilisatorabschnitt.

Bei dem erfindungsgemäßen Stabilisator haben im Idealfall die wesentlichen Stabilisatorabschnitte eine quasi-gleiche Schwingfestigkeit; dieses Ziel ist aber, bedingt durch Restriktionen (Grenzen für Durchmesser und Steifigkeit) nicht immer realisierbar, wobei die Optimierung aber immer in Richtung Idealfall vorzunehmen ist. Die Optimierung geschieht durch Verlagerung von mechanischer Verformungsarbeit aus dem hochbeanspruchten Schulterbogen- bzw. Schulterlagerbereich in den normalerweise niedriger beanspruchten U-Rücken und wahlweise zusätzlich auch in niedriger beanspruchte Bereiche der U-Schenkel. Dies wird erreicht, indem man den Schulterbogen- bzw. Schulterlagerbereich verstärkt, also den Außendurchmesser *D*_{*a*} und evtl. die Wandstärke t vergrößert, wodurch dort die Federrate ansteigt, und gleichzeitig den U-Rücken und wahlweise zusätzliche Bereiche der U-Schenkel schwächt, also den Außendurchmesser *D*_{*a*} und evtl. die Wandstärke t verringert, wodurch dort die Federrate sinkt.

In den einzelnen Stabilisatorabschnitten sind die Basis-Querschnitte (vor dem Formen des Stabilisators) aus fertigungstechnischen und wirtschaftlichen Gründen vorzugsweise konstant mit entsprechenden Übergängen vom dem einen in den anderen Stabilisatorabschnitt.

Die Veränderung der Querschnitte wird in den einzelnen Stabilisatorabschnitten so gewählt, daß die Gesamtfederrate insgesamt der eines vergleichbaren Voll- oder Rohrstabilisators mit über der gesamten Stabilisatorlänge quasi-gleichen Querschnitten entspricht.

Durch die Festlegung der einzelnen Bereiche mit unterschiedlichen, vorzugsweise konstanten Querschnitten, gibt es zwischen den Bereichen und in den Bereichen selbst unterschiedliche Beanspruchungen mit Maxima und Minima, so daß kein Stabilisator mit gleicher Beanspruchung in allen Stabilisatorabschnitten vorliegt.

Wichtig ist zu erwähnen, daß im mehr Verformungsarbeit aufnehmenden U-Rücken die Beanspruchung um bis zu 32 % (Bezug = Vollstab konstant) bzw. 17 % (Bezug = Rohr konstant) angehoben werden kann, um im entlasteten Schulterbogen- bzw.

Schulterlagerbereich Beanspruchungsreduzierungen von bis zu 12 % (Bezug = Vollstab konstant) bzw. 20 % (Bezug = Rohr konstant) zu erreichen.

Im Stand der Technik ist versucht worden, die Lebensdauer bzw. die zulässige Beanspruchung des Stabilisators dadurch zu erhöhen, daß die am stärksten beanspruchten Stabilisatorabschnitte auf unterschiedliche Weise verstärkt worden sind. Bei dem erfindungsgemäßen Stabilisator wird jedoch die Lebensdauer bzw. die zulässige Beanspruchung dadurch wesentlich erhöht, daß mechanische Verformungsarbeit aus dem hochbeanspruchten Schulterbogen- bzw. Schulterlagerbereich in den normalerweise niedriger beanspruchten U-Rücken verlagert wird, indem der U-Rücken "weicher " gemacht wird.

Der mehr Verformungsarbeit aufnehmende Bereich im U-Rücken ist vorzugsweise mit einem geringeren Außendurchmesser ausgebildet als die Übergangsbereiche. Somit ist der U-Rücken des erfindungsgemäßen Stabilisators "weicher" als der U-Rücken der bekannten Stabilisatoren; er trägt somit wesentlich mehr zur Gesamtverformung bei Betriebsbelastung bei. Die Ausgestaltung des Stabilisators mit einem im Bereich des U-Rückens verringerten Außendurchmessers ist fertigungstechnisch sehr einfach zu realisieren, beispielsweise durch entsprechendes Kneten des für den Stabilisator verwendeten Stabes oder Rohres vor oder auch nach dem Biegen. Alternativ kann darüber hinaus auch die Wandstärke des Stabilisators im Bereich des U-Rückens verringert sein. Zusätzlich ist auch eine Kombination aus geringeren Außendurchmesser und verringerter Wandstärke des Stabilisators im Bereich des U-Rückens möglich, um eine weitere Gewichtsreduzierung zu erreichen.

Eine bevorzugte Ausführungsform des erfindungsgemäßen Stabilisators ist ergänzend dadurch gekennzeichnet, daß eine Festigkeitserhöhung durch Aufkohlung der äußeren und/oder inneren Oberflächenrandschicht des Stabilisators, insbesondere in Verbindung mit einem Vergütungsprozeß, erzielt ist Dabei kann das Aufkohlen sowohl vor dem Vergütungsprozeß erfolgen, dann bevorzugt auch vor dem Kneten und Formen des Stabilisators, als auch gleichzeitig mit dem Vergütungsprozeß.

Innerhalb des Fertigungsprozesses des Stabilisators verringert sich der Kohlenstoffgehalt des Werkstoffes in der Oberflächenrandschicht. Da der Kohlenstoffgehalt einen Einfluß auf die Zugfestigkeit des Materials hat, verringert sich durch die Abnahme des Kohlenstoffgehaltes in der besonders beanspruchten Oberflächenrandschicht des Stabilisators dessen Schwingfestigkeit. Die Aufkohlung erhöht also die Zugfestigkeit der Oberflächenrandschicht des Stabilisators, und damit wird die Anzahl der erreichbaren Lastwechsel ebenfalls erhöht. Dieser Effekt wird durch Vergüten in besonderem Maße verstärkt.

Gerade bei hohen Grundfestigkeitswerten, z. B. 1.500 - 1.800 MPa sind in der aufgekohlten Oberflächenrandschicht Erhöhungen, bezogen auf die Grundfestigkeit, von ca. 10 - 50 % erreichbar. Hierdurch kann die zulässige Beanspruchung bzw. die Schwingfestigkeit deutlich erhöht werden.

Durch die Aufkohlung wird der Kohlenstoffgehalt der Oberflächenrandschicht des Stabilisators vorzugsweise soweit erhöht, daß er in der Oberflächenrandschicht höher ist als im Inneren des Stabilisators. Dadurch wird die Zugfestigkeit in der besonders beanspruchten Oberflächenrandschicht des Stabilisators und somit die Lebensdauer insgesamt erhöht.

Handelt es sich bei dem erfindungsgemäßen Stabilisator um einen Rohrstabilisator, so kann die zugelassene höhere Beanspruchung im Bereich des U-Rückens dazu ausgenutzt werden, um die Wandstärke im Bereich des U-Rückens verringert wird. Dabei kann der Außendurchmesser über der gesamten Länge des Stabilisators konstant sein oder im Bereich des U-Rückens einen anderen Wert aufweisen. Durch die Möglichkeit, sowohl den Außendurchmesser als auch den Innendurchmesser des Stabilisators zu verändern, um die zulässige höhere Beanspruchung im Bereich des U-Rückens auszunutzen, gibt es keine Probleme, die vom Kraftfahrzeughersteller vorgegebenen Außenabmessungen des Stabilisators einzuhalten.

Ändert sich der Außendurchmesser des erfindungsgemäßen Stabilisators, so kann diese Änderung sowohl beim Vollstabilisator als auch beim Rohrstabilisator entweder sprunghaft oder kontinuierlich ausgebildet sein. Entsprechendes gilt auch für die Änderung der Wandstärke beim Rohrstabilisator, also der Änderung des Innendurchmessers alleine oder in Kombination mit dem Außendurchmesser.

Schließlich kann es noch besonders vorteilhaft sein, bei einem als Rohrstabilisator ausgeführten erfindungsgemäßen Stabilisator die innere Oberfläche durch Kugelstrahlen zu behandeln. Auch durch diese Maßnahme kann die Anzahl der zulässigen Lastwechsel erhöht werden, unter Umständen sogar beachtlich erhöht werden.

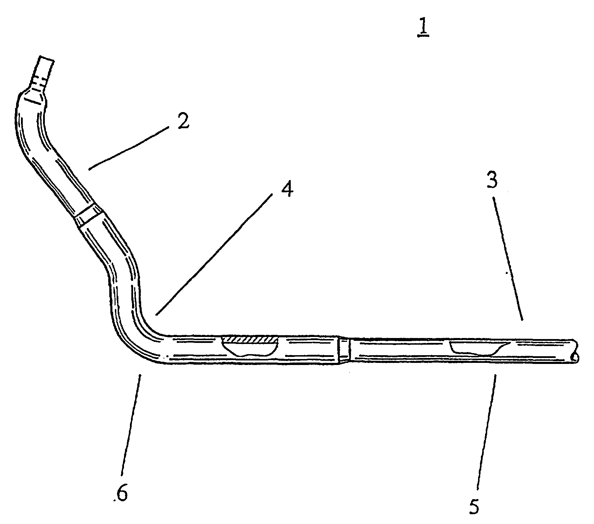

Im einzelnen gibt es verschiedene Möglichkeiten, den erfindungsgemäßen Stabilisator auszugestalten und weiterzubilden. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigt die einzige Figur eine Hälfte eines erfindungsgemäßen Stabilisators, in diesem Fall eines Rohrstabilisators.

Die Figur zeigt eine Hälfte eines spiegelsymmetrischen Stabilisators 1, in diesem Falle eines Rohrstabilisators, der einen kreisringförmigen Querschnitt aufweist und im wesentlichen U-förmig ausgeführt ist, mit einem U-Schenkel 2 und einer Hälfte eines U-Rückens 3. Der U-Schenkel 2 und der U-Rücken 3 sind durch einen bogenförmigen Übergangsbereich 4 miteinander verbunden. Ein solcher Stabilisator 1 wird mit den freien Enden der U-Schenkel 2 an den hier nicht dargestellten Radführungsteilen eines Kraftfahrzeuges befestigt. Das dargestellte freie Ende des U-Schenkels 2 wird dabei an den entsprechenden Radführungsteilen befestigt. Der U-Rücken 3 ist in der Nähe des Übergangsbereiches 4 angeordneten, hier nicht dargestellten Gummilagern am Fahrzeugaufbau gelagert.

Bei dem dargestellten bevorzugten Ausführungsbeispiel eines erfindungsgemäßen Stabilisators 1 ist der Außendurchmesser des Stabilisators 1 im torsionsspannungsdominanten Stabilisatorabschnitt 5, welcher sich im Bereich des U-Rückens 3 befindet, kleiner als im normalspannungsdominanten Stabilisatorabschnitt 6, welcher sich im Übergangsbereich 4 befindet. Zusätzlich ist auch die Wandstärke des Stabilisators 1 im torsionsspannungsdominanten Stabilisatorabschnitt 5 geringer als im normalspannungsdominanten Stabilisatorabschnitt 6. Der beschriebenen Verringerung des Außendurchmessers und der Wandstärke geht die erfindungsgemäße Überlegung voraus, daß der "weichere" U-Rücken 3 eine größere mechanische Verformungsarbeit aufnimmt als der die zulässige Anzahl an Lastwechseln stärker beschränkende Übergangsbereich 4. Die Änderung sowohl des Außendurchmessers als auch der Wandstärke des Stabilisators 1 erfolgt bei dem dargestellten Ausführungsbeispiel kontinuierlich, so daß keine die Schwingfestigkeit des Stabilisators 1 negativ beeinflussenden Kanten entstehen.

Bei dem dargestellten Ausführungsbeispiel eines erfindungsgemäßen Stabilisators 1 ist durch Aufkohlung der Kohlenstoffgehalt der äußeren Oberflächenrandschicht des Stabilisators 1 so weit erhöht worden, daß er an der Oberflächenrandschicht, und zwar sowohl an der Innenseite als auch an der Außenseite, höher als im Inneren der Stabilisatorwand ist. Dadurch kann, insbesondere in Verbindung mit einer Vergütung, die Zugfestigkeit der Oberflächenrandschicht des Stabilisators im Vergleich zur Zugfestigkeit eines entkohlten Materials um die Hälfte, vorzugsweise sogar um über zwei Drittel erhöht werden.

Zumindest im Übergangsbereich 4 ist die innere Oberfläche des Stabilisators 1 noch besonders behandelt, nämlich durch Kugelstrahlen. Durch diese Maßnahme kann die zulässige Anzahl an Lastwechsel nochmals um einen Faktor von etwa vier erhöht werden.

## Patentansprüche

1. Stabilisator für Kraftfahrzeuge, der einen annähernd runden, vorzugsweise einen kreisrunden oder einen ringförmigen, vorzugsweise einen kreisringförmigen Querschnitt aufweist, aus mehreren Stabilisatorabschnitten besteht und im wesentlichen U-förmig ausgeführt ist, also aus zwei U-Schenkeln (2) und einem U-Rücken (3) besteht, wobei zwischen den U-Schenkeln (2) und dem U-Rücken (3) bogenförmige Übergangsbereiche (4) vorgesehen sind, **dadurch gekennzeichnet, daß** in den wesentlichen Stabilisatorabschnitten - abweichend vom Stabilisator gleicher Beanspruchung - unter Erhöhung der Beanspruchung des torsionsdominant beanspruchten U-Rückens (3) durch Verlagerung von mechanischer Verformungsarbeit aus den Übergangsbereichen (4) in den U-Rücken (3) eine Schwingfestigkeitsoptimierung durchgeführt ist, so daß eine quasi-gleiche Schwingfestigkeit vorhanden ist.

2. Stabilisator nach Anspruch 1, **dadurch gekennzeichnet, daß** im torsionsspannungsdominanten Stabilisatorabschnitt (5) der Außendurchmesser des Stabilisators (1) kleiner ist als im normalspannungsdominaten Stabilisatorabschnitt (6).

3. Stabilisator nach Anspruch 1 oder 2, **dadurch gekennzeichnet, daß** eine Festigkeitserhöhung durch Aufkohlung der äußeren und/oder inneren Oberflächenrandschicht des Stabilisators (1), insbesondere in Verbindung mit einem Vergütungsprozeß, erzielt ist.

4. Stabilisator nach Anspruch 3, **dadurch gekennzeichnet, daß** durch Aufkohlung der Kohlenstoffgehalt der Oberflächenrandschicht des Stabilisators (1) soweit erhöht wird, daß er an der Oberflächenrandschicht höher ist als im Inneren des Stabilisators (1) bzw. als im Inneren des kreisringförmigen Querschnittes.

5. Stabilisator nach einem der Ansprüche 1 bis 4, mit einem kreisförmigen Querschnitt, **dadurch gekennzeichnet, daß** die Wandstärke im torsionsspannungsdominanten Stabilisatorabschnitt (5) geringer ist als im normalspannungsdominanten Stabilisatorabschnitt (6).

6. Stabilisator nach Anspruch 5, **dadurch gekennzeichnet, daß** der Außendurchmesser im torsionsspannungsdominanten Stabilisatorabschnitt (5) geringer ist als im normalspannungsdominanten Stabilisatorabschnitt (6).

7. Stabilisator nach einem der Ansprüche 1 bis 6, mit einem kreisringförmigen Querschnitt, **dadurch gekennzeichnet, daß** die innere Oberfläche zumindest teilweise, vorzugsweise in den Übergangsbereichen (4), kugelgestrahlt ist.

## Claims

1. stabilizer for motor vehicles which has a roughly round, preferably spherical, or annular, preferably toroidal, cross section, which has several stabilizer sections and which is made essentially U-shaped, having two U-legs and a U-back wherein arc-shaped transitional shoulder areas are provided between the U-legs and the U-back **characterized in that** an optimization of the vibrational strength is realized in the essential stabilizer sections - differing from stabilizers having the same load - under an increase of the load of the torsionally strained U-back (3) by shifting mechanic strain from the transitional areas (4) to the U-back (3) so that a quasi-equivalent vibrational strength exists.

2. Stabilizer according to claim 1, **characterized in that** the outer diameter of the stabilizer (1) is smaller in a stabilizer section (5) that is predominately subjected to torsional stress than a stabilizer section (6) subjected to normal stress.

3. Stabilizer according to claim 1 or 2, **characterized in that** an increase of strength is achieved by carburization of the outer and/or inner surface edge layer of the stabilizer (1), in particular in combination with a coating process.

4. Stabilizer according to claim 3, **characterized in that** the stabilizer (1) has been carburized in a manner increasing the carbon content of a surface edge layer of a the stabilizer so as to be higher than within the stabilizer (1) or respectively the inside of the annular cross section.

5. Stabilizer according to any one of claims 1 to 4, having a circular cross section, **characterized in that** the wall thickness is smaller in a stabilizer section (5) that is predominately subjected to torsional stress than a stabilizer section (6) subjected to normal stress.

6. Stabilizer according to claim 5, **characterized in that** the outer diameter of the stabilizer section (5) that is predominately subjected to torsional stress is smaller than a stabilizer section (6) subjected to normal stress.

7. Stabilizer according to any one of claims 1 to 6 having a circular cross section, **characterized in that** the inner surface is at least partially shot peened, preferably in the transitional areas (4).

## Revendications

1. Stabilisateur pour véhicules automobiles, qui présente une section transversale approximativement ronde, de préférence circulaire ou de forme de forme annulaire, de préférence en forme d'arc de cercle, consiste en plusieurs sections de stabilisateur et est sensiblement réalisé en forme de U, donc consiste en deux branches en U (2) et un dos en U (3), des zones de transition (4) de forme arquée étant prévues entre les branches en U (2) et le dos en U (3),
**caractérisé en ce que**,
dans les sections de stabilisateur essentielles -à la différence d'un stabilisateur à sollicitation identique-, une optimisation de résistance à l'oscillation est réalisée en augmentant la sollicitation du dos en U (3) sollicité avec une dominante de torsion en déplaçant la contrainte mécanique de déformation des zones de transition (4) vers le dos en U (3) de manière à avoir une résistance à l'oscillation quasiment identique.

2. Stabilisateur selon la revendication 1, **caractérisé en ce que**, dans la section de stabilisateur (5) à dominante de tension de torsion, le diamètre extérieur du stabilisateur (1) est plus petit que dans la section de stabilisateur à dominante de tension normale (6).

3. Stabilisateur selon la revendication 1 ou 2, **caractérisé en ce qu'**une augmentation de résistance est obtenue par carburation de la couche marginale de surface intérieure et/ou extérieure du stabilisateur (1), notamment en liaison avec un processus d'écrouissage.

4. Stabilisateur selon la revendication 3, caractérisé en ce la teneur en carbone de la couche marginale de surface du stabilisateur (1) est augmentée par carburation jusqu'à ce qu'elle soit plus élevée sur la couche marginale de surface qu'à l'intérieur du stabilisateur (1) ou à l'intérieur de la section transversale en forme d'arc de cercle.

5. Stabilisateur selon l'une quelconque des revendications. 1 à 4 à section transversale en forme d'arc de cercle, **caractérisé en ce que** l'épaisseur de paroi est plus faible dans la section de stabilisateur à dominante de torsion (5) que dans la section de stabilisateur à dominante de tension normale (6).

6. Stabilisateur selon la revendication 5, **caractérisé en ce que** le diamètre extérieur est plus faible dans la section de stabilisateur à dominante de torsion (5) que dans la section de stabilisateur à dominante de tension normale (6).

7. Stabilisateur selon l'une quelconque des revendications 1 à 6 à section transversale en forme d'arc de cercle, **caractérisé en ce que** la surface interne est écrouie du moins partiellement, de préférence dans les zones de transition (4).
